(19) Europäisches Patentamt
European Patent Office
Office européen des brevets

(11) Publication number: **0 081 870 A1**

(12) **EUROPEAN PATENT APPLICATION**

(21) Application number: **82201496.5**

(22) Date of filing: **25.11.82**

(51) Int. Cl.³: **A 01 N 43/70** // (A01N43/70, 43/54)

(30) Priority: **11.12.81 CH 7926/81**

(43) Date of publication of application: **22.06.83 Bulletin 83/25**

(84) Designated Contracting States: **AT BE CH DE FR GB IT LI LU NL SE**

(71) Applicant: **SIEGFRIED AKTIENGESELLSCHAFT, CH-4800 Zofingen (CH)**

(72) Inventor: **Meyer, Jacques, Obere Brühlstrasse 1, CH-4800 Zofingen (CH)**
Inventor: **Schären, Walter, Lärchenfeld 440, CH-4803 Vordemwald (CH)**

(74) Representative: **Ritscher, Thomas, Dr. et al, RITSCHER & SEIFERT Auf der Mauer 4, CH-8001 Zürich (CH)**

(54) **A composition for selective control of weeds and method for controlling weeds in a crop area.**

(57) A composition for selective control of weeds in a crop area comprises in mixture the combination of an s-triazine of the formula (1)

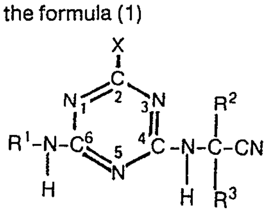

(1)

wherein X is a halogen atom and $R^1$, $R^2$ and $R^3$ are the same or different $C_1$-$C_2$ alkyls, as a first active ingredient, and of a uracil of the formula (2)

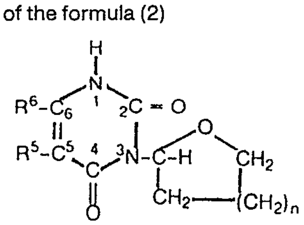

(2)

whrein $R^5$ is chloro, bromo, fluoro, hydrogen or methyl, $R^6$ is $C_1$-$C_4$ alkyl or phenyl, and n is an integer of 1 or 2, as a second active ingredient.

A method for selective weed control in a crop area by treating the crop area with an effective amount, e.g. 0.5 to 4 kg/ha, of a synergetic combination of at least one compound of formula (1) and at least one compound of formula (2).

EP 0 081 870 A1

A composition for selective control of weeds and method for controlling weeds in a crop area

The present invention relates to weed control by means of herbicides and more particularly to compositions and methods for selectively controlling weeds in crop areas such as wheat or potato fields, fruit plantations and other croplands where a broad spectrum of weeds must be controlled.

Weed control for agricultural purposes remains a topic of great importance even though many different classes of compounds as well as thousands of specific compounds have been disclosed in the literature for the purposes of both general and selective weed control.

However, spontaneous growth of undesired plants or weeds in a crop area that should be maintained free of such weeds for optimum crop yield is an extremely complex phenomenon dependent upon various static and dynamic factors including type of soil, climate, floral area, adventive plant ingressions, etc., and no generally applicable or universal solution of the problems involved in recurring or spontaneous growth of weeds by agrochemical means is expected in the near future.

Other unsolved problems in this area include widely differing sensitivities of crop plants against herbicidal chemicals as well as the fact that repression of one weed species may cause increased growth of another competing weed species, and that some weeds tend to become resistant against previously effective herbicides.

Thus, there is a continued need for novel and improved agents for selective control of weeds while, at the same time, introduction of completely new chemicals causes problems because of the need of long-term testing for such properties as general environmental effects, residue, chronic toxicity, teratogenicity, etc. The use of specific combinations of known and well-tested substances would reduce these problems if the ingredients of the combination complement each other as is the case, typically, for combinations of herbicidal substances with surfactants or the like adjuvants.

The results of combining different herbicidal chemicals generally called "active ingredients" are not, as a rule, predictable. In theory, suitably complemental ingredients might yield mixtures wherein the properties of the mixture should be predictable from the properties of the ingredients. In practice, however, any mixture of two or more herbicidal active ingredients entails the risk of an unexpected reinforcement of negative properties, e.g. damage to crop plants, and even a merely additive, i.e. favorably complemental mixture of active ingredients is considered a "lucky" mixture in the art and is not predictable.

The most desirable aim is, of course, a combination having properties that are more advantageous than the sum of the properties of the active ingredients, i.e. a better-than-additive or so-called synergetic or synergistic combination.

Specifically, a continued need exists for improved herbicide control in croplands where a broad spectrum of different types of weeds tends to florish, e.g. including dicotylodone-type or broad-leaf weeds as well as monocotylodone-type grass weeds comprising both annual and perennial types. Thus, a wide spectrum of herbicidal activities must be combined with avoidance of damage to crop plants and a satisfactory permanence of weed control should be combined with absence of detrimental effects upon the soil, the herbicide-applying personnel and consumers of the crops.

Accordingly, it is a primary object of the invention to provide for a new and synergetic combination of substances known for weed control per se.

Another object is an improved composition for use in broad-spectrum-control of weeds. A further object is an improved method of controlling a broad spectrum of weed types and species in a crop area.

Further objects will become apparent as this specification proceeds.

The above objects and further advantages are achieved, in accordance with the present invention, by combining at least one s-triazine of the formula

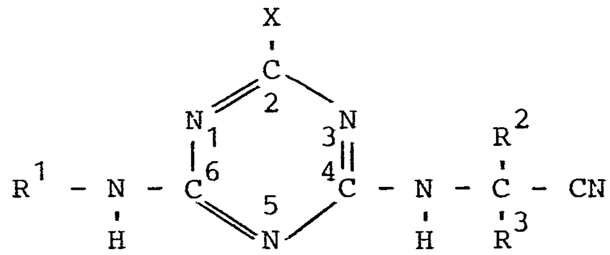

(1)

wherein X is a halogen atom (i.e. F, Cl, Br, I) and $R^1$, $R^2$ and $R^3$ are independently selected from $C_1$-$C_2$ alkyls, i.e. methyl and ethyl, as a first active ingredient, with at least one uracil of the formula

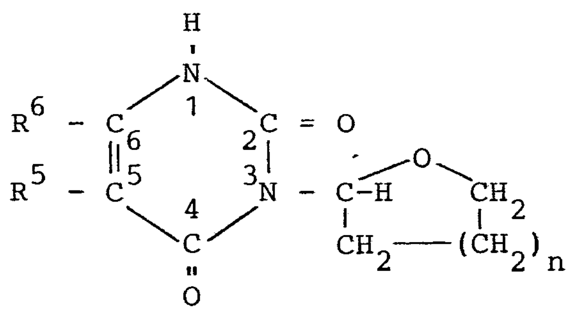

(2)

wherein $R^5$ is hydrogen, methyl, fluoro, chloro or bromo, $R^6$ is a $C_1$-$C_4$ alkyl or phenyl, and n is an integer of 1 or 2, as a second active ingredient.

The s-triazines of the formula (1) are known per se as well as for use as herbicides, cf. British Patent Specification No. 1,132,306.

Bromo and chloro (as X) are preferred; the compound of formula (1) wherein $R^1$ is ethyl, $R^2$ and $R^3$ are each methyl and X is chloro is available commercially, e.g. from Shell Company, and, hence, preferred because of its availability and the fact that it has been used and tested for more than a decade.

While the formula (1) s-triazines - also referred to as "compounds (1)" hereinbelow - are effective against a number of grass-type or monocotylodone weeds as well as several broadleaf or dicotylodone-type weeds, their width of effectiveness has a number of "gaps", e.g. with the "hard-to-kill" broadleaved weeds, such as Veronica persica, and with many grass weeds, such as Echinochloa crus-galli and foa annua.

A further limitation of the formula (1) herbicides is that their activity is closely dependent upon the type of soil. An increasing content of clay or of organic matter in the soil requires substantially increased dosage rates for sufficient weed control; when the organics content of the soil increases above about 10 %, by weight, of organic matter, results of weed control with the formula (1) triazines will become unpredictable.

According to the invention the above shortcomings of the formula (1) triazines will be reduced or eliminated when used in combination with the formula (2) uracils for weed control.

Again, formula (2) uracils - also referred to herein as "compounds (2)" - have been known per se for at least a decade, and suggested for use as herbicides; cf. Swiss Patents Nos. 544,493 and 544,769.

It is to be noted that the term "uracil" has been accepted in the art as the short common name for 2,4(1H,3H)-pyrimidinedione, and the term "uracils" is used to refer to various uracil derivatives. Specific uracils are available commercially; the 5-chloro-6-methyl-3-(tetrahydropyran-2-yl)-uracil, for example, is obtainable from Roussel-Uclaf, France.

Specific examples of formula (2) uracils are the compounds according to the following Table I.

TABLE I

Examples of Compounds of the Formula (2)

| Compound No. | Significance of n | $R^5$ | $R^6$ |
|---|---|---|---|
| 2/1 | 2 | $CH_3$ | $CH_3$ |
| 2/2 | 1 | Cl | $CH_3$ |
| 2/3 | 2 | H | $CH_3$ |
| 2/4 | 2 | Cl | $CH_3$ |
| 2/5 | 2 | Br | $CH_3$ |
| 2/6 | 1 | Br | $CH_3$ |
| 2/7 | 1 | Cl | $CH_3$ |
| 2/8 | 2 | H | phenyl |
| 2/9 | 2 | Cl | phenyl |
| 2/10 | 2 | Br | phenyl |

Preferred compounds are those wherein $R^5$ is a halogen atom (F, Cl, Br), chlorine or bromine being particularly preferred and chlorine being most preferred; pyranyl compounds [n in formula (2) is 2] are generally preferred over the furanyl compounds [n in formula (2) is 1]; compounds 2/4 and 2/5 are particularly preferred.

$R^6$, in formula (2), may represent any $C_1$-$C_4$ alkyl, i.e. ethyl, propyl and butyl in addition to methyl and both straight or branched chain $C_2$-$C_4$ alkyls may be used as $R^6$ instead of methyl or phenyl.

The formula (2) compounds are known to have but a limited scope of weed control effectiveness.

In general, a combination according to the invention contains the active ingredients of formula (1) and formula (2) in a ratio of from about 10:1 to about 1:2, i.e. in the range of 10 to 0.5. Preferably, the synergetic combination of a formula (1) compound and a formula (2) compound - also referred to as "combination (1) + (2)" hereinbelow - contains about 2 to about 5 parts and preferably about 3 to 4 parts, by weight, of the formula (1) compound per each part, by weight, of the formula (2) compound. In other words, the preferred compound ratio (1):(2) is between about 2:1 and about 5:1.

When the weight ratio (1):(2) is above 10 there will be less or no synergism of the ingredients and the effects of the combination will be similar to those of the formula (1) compound, i.e. have insufficient effectiveness over a broad spectrum of weeds and suffer from the above described defects.

On the other hand, i.e. with a (1):(2) weight ratio of below 0.5 the effects of the combination tend to approach those of compound (2) if used without (1) and suffer from the above mentioned shortcomings, and there will be less or no synergism.

Within the preferred range (1):(2) of from about 2 to about 5 a preferred specific weight ratio is 3.5 parts, by weight, of compound (1) per each part, by weight, of compound (2).

Generally, the inventive combination (1) + (2) will be effective for weed control in amounts or dosage rates in the range of from about 0.5 to about 4 kg active ingredients [weight total of (1) and (2)] per hectare of crop area depending somewhat upon the crop plants involved.

For example, an optimum dosage for using the inventive combination (1) + (2) on cereal-type crop plants including wheat, barley, rye and oats will be in the range of from about 0.75 to 1 kg of the combined active ingredients (1) + (2) per hectare (kg/ha) of cereal crop area; for maize, an optimum dosage will be in the range of from about 1.5 to 2 kg/ha, and for potatoes an optimum dosage will be in the range of from about 3 to 3.5 kg/ha.

When using dosage rates generally below 0.5 kg/ha or, for the specific crop plants mentioned, below the lower range end, weed control will tend to become insufficient while dosage rates of above about 5 kg/ha may tend to cause crop damage. It should be emphasized that with the specific crop plants mentioned above crop plant damages are safely prevented as long as the upper limits of the dosage ranges are not transgressed by more than about 0.5 kg/ha. In general, crop plant damage will not commence as long as the upper limit of the dosage range given above for a specific crop is transgressed by not more than about 1.5 kg/ha.

The above mentioned dosage ranges are given for illustration only and do not preclude use of the synergetic combination for other types of crop plants such as vegetable or fruit plantations, vineyards, etc.

The inventive combination (1) + (2) is suitable both for pre-emergence as well as post-emergence weed control.

It should be noted that while the invention requires use of the combination (1) + (2), it does not preclude using additional substances together with the formula (1) and (2) compounds. Such additional substances may be "inactive" such as

extenders or diluents, "functional" such as adjuvants including surfactants used for the purpose of obtaining or maintaining a given composition in a desirable or required state, as well as thickeners, defoaming agents, anti-freeze agents, coloring materials, or "active" substances such as fungizides, insectizides, mineral oils, surfactants that improve adhesion to plants, fertilizers and other substances for plant growth control as long as they do not interfere with the synergetic properties of the inventive combination. Again, such further constituents are known in the agrochemical art.

Both active ingredients (1) and (2) of the subject combination are normally solid and can be applied onto a crop area in solid form, e.g. as a pulverulent or granular preparation generally in mixture with a solid extender or diluent. Alternatively, the ingredients can be dispersed or dissolved in a liquid extender or diluent. Further, both ingredients (1) and (2) can be used herein in commercially available grades and in conventional particle sizes for herbicide use of typically below 30 µm, notably 10 µm or smaller.

Many preferred formulations will, in general, contain one or more surfactants, e.g. alcanol amines of fatty acids, polyglycol ethers and the like; numerous examples will be found in standard reference books, e.g. "McCutcheon's Detergent and Emulsifier Annual" or "Encyclopedia of Surface-Active Agents" by Sisley and Wood. Specific examples are "Atlox 4853 B" obtainable from Atlas Chemical Industries N.V. and "Nekal" obtainable from BASF AG.

Suitable solid or liquid extenders are known in the art and include finely divided solids such as talcs, clays, kieselgur, nut-shell flower as well as aqueous and non-aqueous liquids including organic solvents, mineral oils and the like.

Generally speaking, a composition formulated for use in the invention may contain from about 1 % to about 99 %, by weight, of the combination (1) + (2) depending upon the type of application as well as the applicator apparatus used. As representative examples, tank applicators and tank mixture formulation or dusting equipment and dust mixture formulation can be mentioned. Tank mixtures can be made from relatively concentrated compositions and mixed with water prior to application as is conventional in the herbicide art.

For example, a wettable powder formulation may contain up to 50 or 60 %, by weight, of active ingredient (1) + (2) while a granulate may include as little as 3 to 10 %, by weight, of the active ingredients.

Other types of formulations suitable for use herein include solutions, emulsions, suspensions, aerosols, dusts, pastes and granulates. Wettable powders and aqueous emulsions are preferred for many types of application while emulsion-type or suspension-type concentrates are preferred formulations for in situ dilution, generally with water.

Inventive compositions containing the synergetic combination (1) + (2) in a formulation for use or storage can be obtained by conventional blending, mixing or emulsifying methods from the above constituents, including milling in hammer mills, high-shear mixers, fluid mills and the like.

The invention will now be explained in more detail in the following examples that illustrate, but are not intended to limit, the invention. Parts and percentages are by weight unless otherwise indicated.

Greenhouse and field tests were generally made according to standard herbicide test procedures as recommended by the European Weed Research Council (EWRC). Field tests were made at various trial sites in Switzerland and replicated trials were made at each site; each site contained a plurality of defined plots of at least about 10 $m^2$ each. There was at least one untreated plot per site as control and one or more plots for comparative purposes.

Weed control effectiveness (for defined weed species) was determined by visual observation and scored according to the EWRC-scale that ranges from 1 to 9 and in which "9" indicates "no damage of weed", i.e. a weed control effectiveness of Zero Percent, while "1" indicates total killing of the weeds concerned, i.e. a weed control effectiveness of 100 %.

The compositions were applied in various dosages in the form of aqueous sprays (prepared from a wettable powder) at a substantially uniform spray rate of about 1000 Liters per hectare with a "log" sprayer or a field plot sprayer ("Van der Weij") using a pressure of 3 bar. The dosage was varied either by varying the concentration of the wettable powder in the aqueous spray used in the field plot sprayer or by means of the "log" sprayer as described in our U.S. Patent No. 4,211,551.

EXAMPLE 1

(1) Preparation of Formulations for Testing

Wettable powder formulations were prepared from mixtures of 50 % of the active ingredient or the combination of active ingredients to be tested and 50 % of a blend consisting of 33 parts of white bolus powder (white bole or kaolin), 10 parts of commercial lignin sulfonate, 5 parts of finely divided silica and 2 parts of the commercial alkylaryl sulfonate surfactant sold under the name NEKAL (reg. trademark).

The constituents were blended, coarsely milled and passed through a fluid mill to produce particles of active ingredients that are all below about 30 microns in diameter. The product was reblended before packaging. For use of this composition in selective weed control, the composition was suspended in a desired amount of water and applied to the area that was to be treated, typically in an amount of about 1 to about 8 kilograms of the composition per hectare of the area.

Generally, such a wettable powder is suitable for dispersion in water at a proportion of 20 to 600 parts of water per part of the composition to provide aqueous compositions that can be applied at a spray rate of between 500 and 1500 Liters per hectare.

(2) Active Ingredient(s)

Compositions in the form of wettable powders were made as set forth above using the following active ingredients individually or in combinations as specified below as the 50 % portion of the formulation:

Compound (1):

2-chloro-4-(1-cyano-1-methyl-ethylamino)-6-ethylamino-1,3,5-triazine, i.e. the formula (1) compound having the structure

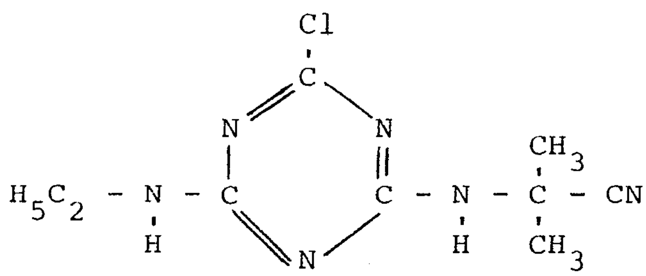

Compound (2):

5-chloro-6-methyl-3-(tetrahydropyran-2-yl)-uracil, i.e. the formula (2) compound having the structure

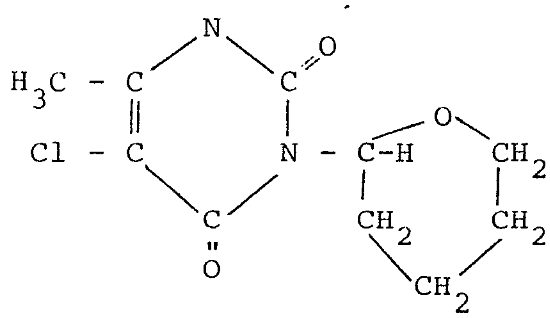

Combinations (1) + (2):

Mixtures of the specific formula (1) compound and the specific formula (2) compound (both commercial grade) were made in various ratios (1):(2) ranging between 1:2 and 20:1 (specifically: 0.55; 1.1; 2.2; 4.46; 8,93 and 17.86).

Prior Art:

Commercially available herbicides as specified below were used to prepare comparative formulations.

EXAMPLE 2

Greenhouse tests were made to determine the activity of the compounds of formula (1) and (2) when used singly and in combination on various weeds. Test pots were seeded with the weed in question and cultured at temperatures of 20 to 21°C. Weed types tested included both dicotylodones and monocotylodones (Alopecurus myosuroides, Echinochloa crus-galli, Sinapis alba, Galium aparine). The seeded pots were sprayed with the aqueous dispersion of the wettable powder prepared as explained in Example 1 and at the dosage rates indicated for pre-emergence treatment.

The weed control effect was observed 25 days after spraying and expressed in EWRC units. The average control effectiveness (ACE) was calculated. The results are summarized in the following Table II.

TABLE II

Greenhouse Tests of Weed-Control Effectiveness (pre-emergence)

| active ingredient (formula) | dosage rate (kg/ha) | average control effect in EWRC units on | | |
| --- | --- | --- | --- | --- |
| | | Alopecurus & Echinochloa | Sinapis & Galium | ACE (EWRC) |
| (1) | 1 | 4.7 | 2.2 | 3.4 |
| " | 0.5 | 7.2 | 2.7 | 5 |
| " | 0.25 | 8.5 | 5 | 6.8 |
| (2) | 0.225 | 2.5 | 1.7 | 2.1 |
| " | 0.112 | 6 | 2.5 | 4.2 |
| " | 0.056 | 7.5 | 5.5 | 6.5 |
| (1) + (2) | 1 + 0.225 | 1.7 | 1 | 1.4 |
| " " " | 1 + 0.112 | 2.5 | 1 | 1.8 |
| " " " | 1 + 0.056 | 3 | 1.2 | 2.1 |
| (1) + (2) | 0.5 + 0.225 | 1.7 | 1 | 1.4 |
| " " " | 0.5 + 0.112 | 2.7 | 1.2 | 1.9 |
| " " " | 0.5 + 0.056 | 4.7 | 1.7 | 3.2 |

EXAMPLE 3

Greenhouse tests were made in the manner of Example 1 except that the pots were not sprayed upon seeding but after emergence of the weed plants (post-emergence).

To this end the weed plants were allowed to develop until they had reached the two-leaf or four-leaf state and spraying was effected then.

The weed control effect was observed at periodic intervals after treatment until no further change could be noted. The results are summarized in the following Table III.

TABLE III

Greenhouse Test of Weed Control Effectiveness (post-emergence)

| active ingredient (formula) | dosage rate (kg/ha) | average control effect in EWRC units on | | |
|---|---|---|---|---|
| | | Alopecurus & Echinochloa | Sinapis & Galium | ACE (EWRC) |
| (1) | 1 | 2.2 | 4 | 3.1 |
| " | 0.5 | 6.7 | 6.5 | 6.6 |
| " | 0.25 | 9 | 8 | 8.5 |
| (2) | 0.225 | 3 | 1 | 2 |
| " | 0.112 | 4.7 | 4.2 | 4.4 |
| " | 0.056 | 7.7 | 7.5 | 7.6 |
| (1) + (2) | 1 + 0.225 | 1 | 1 | 1 |
| " " " | 1 + 0.112 | 1 | 1 | 1 |
| " " " | 1 + 0.056 | 1.7 | 3 | 2.4 |
| (1) + (2) | 0.5 + 0.225 | 1.5 | 1 | 1.2 |
| " " " | 0.5 + 0.112 | 2.2 | 1.7 | 2 |
| " " " | 0.5 + 0.056 | 5 | 3.2 | 4.1 |

EXAMPLE 4

A naturally grown and mature mixed-weed field heavily infested with "hard-to-kill" weed species, such as Veronica persica, was treated by spraying an aqueous suspension of wettable powder formulations prepared as described in Example 1 using a "log" sprayer.

Damage to the various weed species was observed four weeks after spraying. Weed species included: Atriplex patula, Capsella bursa-pastoris, Chenopodium album, Lamium purpureum, Matricaria chamomilla, Polygonum aviculare and persicaria, Poa annua and Echinochloa crus-galli.

Average control effects on Veronica persica as well as on monocotylodones and dicotylodones are summarized in the following Table IV.

TABLE IV

Field Tests of Weed Control Effectiveness (post-emergence; "log" sprayer)

| active ingredient (formula) | dosage rate (kg/ha) | control effect four weeks after spraying | | |
|---|---|---|---|---|
| | | Veronica persica | dicotylodones (average) | monoctylodones (average) |
| (1) | 0.620 | 4 | 1.6 | 7.5 |
| " | 0.386 | 5 | 2.8 | 9 |
| " | 0.227 | 7 | 3.9 | 8.3 |
| (2) | 0.175 | 8 | 4.3 | 9 |
| " | 0.109 | 9 | 6 | 9 |
| " | 0.064 | 9 | 6.4 | 9 |
| (1) + (2) | 0.620 + 0.175 | 1 | 1 | 2.5 |
| " " " | 0.386 + 0.109 | 1.5 | 1.1 | 3 |
| " " " | 0.227 + 0.064 | 2 | 1.5 | 5.5 |
| Control (untreated) | - | 9 | 9 | 9 |

EXAMPLE 5

Weed-infested wheat fields were treated by spraying with an aqueous suspension prepared from wettable powders prepared as above and containing either the inventive combination at the preferred (1):(2)-ratio of about 3.5:1 and at a dosage of 1.5 and 2 kg (1)+(2)/ha, or commercially available prior art active ingredients believed to be representative (TOLKAN V; ARELON + ANITEN S). The prior art compositions were tested at the dosage rates recommended by the suppliers.

Both weed control effectiveness in EWRC units as well as crop damage was observed four weeks after spraying. Crop plant damage in terms of phytotoxis is judged four to five weeks after spraying by means of the inverse rating derived from EWRC units; a phytotoxicity of 1 indicates no crop damage (Zero percent damage effects) while a phytotoxicity of 9 indicates total (100 %) crop damage.

The results (average of eight trial plots) are summarized in Table V showing that the inventive combination provides for a weed control effectiveness that is at least as good as that obtained with the prior art compositions but is obtained at dosage rates that are only a third or less than those required according to the art. Such results were obtained according to the invention without any crop damage.

TABLE V

Field Test of Weed Control Effectiveness in Wheat Crop (post-emergence; observation 4-5 weeks after treatment)

| active ingredient | (1) + (2) | TOLKAN V | ARELON + ANITEN S |
|---|---|---|---|
| kg/ha | 1.5 (1.17+0.33) | 6.5 | 5 (2 + 3) |
| Capsella bursa pastoris | 1 | 1.3 | 1.8 |
| Galeopsis tetrahit | 1 | 1 | 4 |
| Galium aparine | 2.9 | 4.4 | 2.5 |
| Lamium purpureum | 1 | 1.9 | 5 |
| Matricaria chamomilla | 1.5 | 1.1 | 1.4 |
| Myesotis arvensis | 1 | 1 | 2.8 |
| Papaver rhoeas | 3 | 1.2 | 1 |
| Polygonum aviculare | 1 | 1 | 1 |
| Polygonum convolvulus | 1 | 1 | 1 |
| Stellaria media | 1 | 1.8 | 2 |
| Veronica sp. | 1 | 3.9 | 4 |
| Vicia sp. | 1 | 1 | 1.5 |
| Viola tricolor | 3.4 | 2.8 | 3.5 |
| average dicotylodones | 1.5 | 1.8 | 2.4 |
| Alopecurus myosuroides | 2 | 1.5 | 3.5 |
| Apeia spica venti | 1.2 | 1.1 | 2.1 |
| Poa annua | 1.2 | 2 | 2.6 |
| average monocotylodones | 1.5 | 1.5 | 2.7 |
| phytotoxicity | 1 | 1.7 | 1 |

EXAMPLE 6

Weed-infested potato cropland was treated for selective weed control by spraying in a manner similar as described in Example 5 except that the prior art active ingredient was GOLAPREX.

The inventive combination (1) + (2) was tested both with pre-emergence and post-emergence weed control treatment.

It was found that equivalent results were obtained according to the invention and the prior art, however at a substantially reduced dosage rate of the active ingredient combination according to the invention. The results are summarized in Table VI.

TABLE VI

| active ingredient | (1) + (2) invention | | GOLAPREX (prior art) |
|---|---|---|---|
| dosage rate | 3 kg/ha (2.34 + 0.66) | | 4.5 kg/ha |
| Effect | pre-em. | post-em. | pre-emergence |
| Capsella bursa pastoris | 1 | 1 | 1 |
| Galium aparine | 2.5 | 2 | 2.5 |
| Chenopodium alban | 1 | 1 | 1 |
| Lamium purpureum | 1 | 1 | 1 |
| Stellaria media | 1 | 1 | 1 |
| average control | 1.3 | 1.2 | 1.3 |
| crop phytotoxicity | none | none | none |

All test results obtained so far indicate a most favorable and synergetic effect of the inventive combination (1) + (2) both in pre-emergence as well as in post-emergence treatment that may be preferred for many applications herein.

The synergetic effect includes a better-than-additive and, hence, unexpected weed control effectiveness as well as broad-spectrum effectivity, control of "hard-to-kill" weeds such as Veronica sp., and improved selectivity. At the same time, a broad variety of crop plants including potatoes, wheat, barley, oats, maize, peas, broad beans, sugar beets or cane, berry bushes, fruit trees, grapes, etc. will not be damaged by dosage rates of the (1) + (2) combinations that are highly effective against typical weeds tending to appear with the crop plants mentioned.

Further, it can be assumed that the variations of substitution defined herein above for the formula (1) triazines and the formula (2) uracils in the inventive combination will all show synergism of the type disclosed, notably when using the preferred subgeneric and specific compounds of the formula (1) and (2) compounds.

 

## C L A I M S

1. A composition for selective control of weeds in a crop area, characterized in that the composition comprises in mixture the combination of an s-triazine of the formula (1)

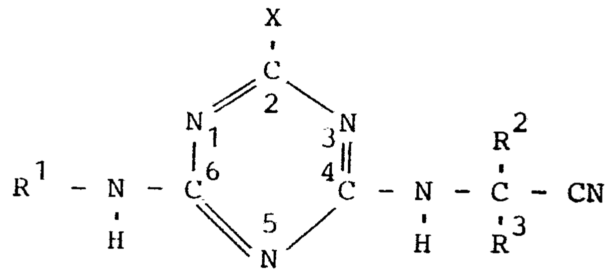

(1)

wherein X is a halogen atom and $R^1$, $R^2$ and $R^3$ are independently selected from $C_1$-$C_2$ alkyls, as a first active ingredient, and of a uracil of the formula (2)

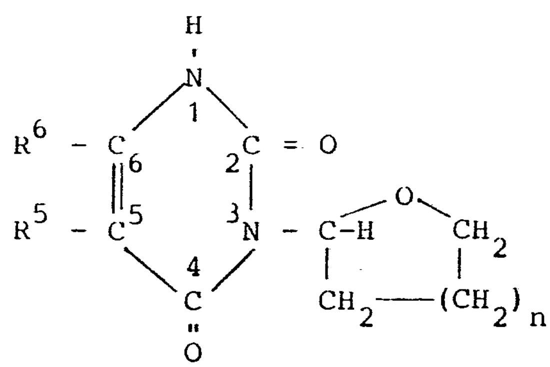

(2)

wherein $R^5$ is selected from chloro, bromo, fluoro, hydrogen and methyl, $R^6$ is selected from $C_1$-$C_4$ alkyls and phenyl, and n is an integer of 1 or 2, as a second active ingredient.

2. The composition of claim 1 comprising said first and said second active ingredient in a weight ratio of from 10:1 to 1:2.

3. The composition of claim 1 comprising from 2 to 5 parts, by weight, of said first or formula (1) active ingredient per each part, by weight, of said second or formula (2) active ingredient.

4. The composition of any of claims 1-3 wherein X in said formula (1) is chloro.

5. The composition of any of claims 1-4 where $R^1$ is ethyl and $R^2$ and $R^3$ are each methyl.

6. The composition of any of claims 1-5 wherein $R^5$ in said formula (2) is selected from the group consisting of chloro and bromo while $R^6$ is methyl and n is 2.

7. The composition of any of claims 1-3 comprising the synergetic combination of 2-chloro-4-(1-cyano-1-methyl-ethylamino)-6-ethylamino-1,3,5-triazine as said first or formula (1) active ingredient and of the 5-chloro-6-methyl-3-(tetrahydropyran-2-yl)-uracil as the said second or formula (2) active ingredient.

8. The composition of claim 7 comprising about 3.5 parts, by weight, of said formula (1) active ingredient per each part, by weight, of said formula (2) active ingredient.

9. A method for selective weed control in a crop area by treating said area with an effective amount of a combination of herbicidal ingredients, characterized by using a synergetic combination of an s-triazine of the formula (1)

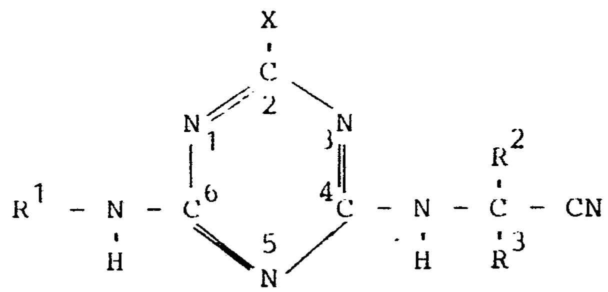

(1)

wherein X is a ahlogen atom and $R^1$, $R^2$ and $R^3$ are independently selected from $C_1$-$C_2$ alkyls, and of a uracil of the formula (2)

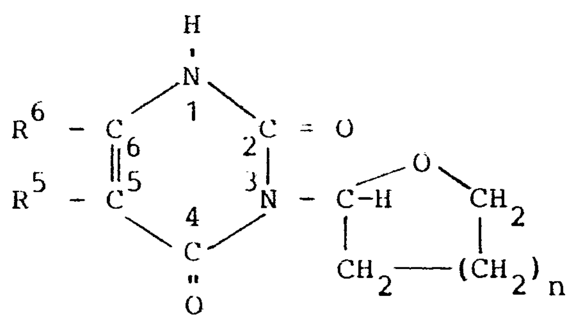

(2)

wherein $R^5$ is selected from hydrogen, methyl, fluoro, chloro and bromo, $R^6$ is selected from $C_1$-$C_4$ alkyls and phenyl, and n is an integer of 1 or 2.

10. The method of claim 9 comprising using said combination at a dosage rate of 0.5 to 4 kg of the combined active ingredients (1) + (2) per hectare of said crop area.

European Patent Office

# EUROPEAN SEARCH REPORT

0081870
Application number

EP 82 20 1496

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A,D | CH-A- 544 493 (ROUSSEL-UCLAF)<br>--- | 1-10 | A 01 N 43/70 //<br>(A 01 N 43/70<br>A 01 N 43/54 ) |
| A | NL-A-6 709 805 (DEGUSSA)<br>----- | 1-10 | |
| | | | TECHNICAL FIELDS SEARCHED (Int. Cl. 3) |
| | | | A 01 N |

The present search report has been drawn up for all claims

| Place of search | Date of completion of the search | Examiner |
|---|---|---|
| THE HAGUE | 21-03-1983 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document